# EUROPEAN PATENT APPLICATION

(11) **EP 3 135 583 A1**
(43) Date of publication of application: **01.03.2017**
(21) Application number: 11761644.1
(22) Date of filing: 20.06.2011
(51) Int. Cl.: B64C 25/56, B64C 35/00

(54) **DEVICE WHEREBY AN AIRCRAFT CAN LAND ON WATER**

(71) Applicant: Wake Engineering, S.L., 28045 Madrid (ES)
(72) Inventor: TURRILLAS LAS HERAS, Arturo, E-20009 San Sebastian (Guipúzcoa) (ES)
(74) Representative: Capitán García, Maria Nuria
(86) International application number: PCT/ES2011/070441
(87) International publication number: WO 2012/175756

(57) **Abstract**

The device comprises at least one folding, inflatable chamber (3), at least one runner (4) for landing on water, which is coupled to the aircraft (2) by means of the chamber (3), and at least one air intake (6) connected to the chamber. The intake (6) allows the entry of incident air into the chamber (3) in order to inflate and deploy the chamber (3), extending the runner (4) from a retracted-runner position into an extended-runner position

## Description

### OBJECT AND TECHNICAL FIELD OF THE INVENTION

The present invention refers to improvements in relation to aircraft construction.

The purpose of the invention is to provide a device that gives an aircraft the ability to safely perform water landings.

The invention has been conceived especially for UAV (Unmanned Aerial Vehicle) type aircraft, model aeroplanes and light aircraft, such as ultralights, small general aviation, or sporting aircraft, being suitable for any type of aircraft, particularly commercial or cargo aircraft.

### BACKGROUND OF THE INVENTION

Devices for water landings are well-known in the state of the art comprisingrunners or skis to provide the aircraft the ability to hydroplane and/or float on the surface of the water in a stable manner.

Aircraft equipped with these devices lose efficiency during flight due to the weight and aerodynamic resistance of the floats and fastening means thereof, in comparison to aircraft with similar features that are only prepared for landing on the ground. Said losses result in higher fuel consumption, less autonomy and a shorter range.

For the purpose of reducing aerodynamic resistance, retractable runners are known which remain retracted inside the fuselage of the aircraft in flight, and extended for water landing and/or takeoff. Some examples of retractable runners are disclosed in the following patent documents: WO-94/13531, CN- 200985093, US-2753135, US-2793827, GB-792680, WO-2007/141425

However, the retractable runner devices known in the art have additional penalties such as added weight on the aircraft, reduced reliability, higher costs and harder maintenance due to their complexity in comparison to non-retractable runners devices for water landings.

There are also water landing devices based on inflatable floating elements known in the art. These elements give the aircraft the ability to float. Some examples of embodiments of these floatation elements can be found in the following patent documents: US-3467343, GB-1149619, US-4382567.

Known in the state of the art is the use of the cited water landing devices for both emergency water landings and ordinary water take off and landing operations.

On the other hand, there is a problem related to water landings especially associated with UAV type aircraft (hereinafter UAVs) or light aircraft in general, stemming from the reduced inertia or amount of movement of this type of aircraft during water landing, which implies that they may be more vulnerable to tip or flip over along the longitudinal or transversal axis on making contact or impacting the surface of the water during the water landing, running the risk of causing considerable damage to the aircraft, the water landing device, and injury to the people on board. Said risk is greater when there are waves because of the impact of the aircraft against the surface of the water is harder.

Currently, UAVs are used for military missions, scouting and monitoring tasks. As regards the present invention, the use of UAVs for scouting and locating banks of fish can be highlighted. Generally, these UAVs are launched with a catapult on board a boat (although they can also be launched from land or other mobile platforms). After the UAV has carried out the mission it falls to the water and is recovered to be used again.

In light of the foregoing review of the known state of the art, it would be desirable to have a simple, low weight, versatile landing device that gives an aircraft the capabilityof safe water landings, especially for use in light aircraft and UAVs. The object of the present invention is to provide a solution to this technical problem.

### DESCRIPTION OF THE INVENTION

For the purpose of solving the technical problem explained above and obtain improvements to the known water landing devices, the proposed invention provides the features and technical effects described below.

The device is characterised in that it comprises at least one inflatable and folding chamber, at least one water landing runner (coupled to the aircraft by means of the chamber) and at least one air intake that communicates or connects the chamber to the outside. The device is configured in such a way that the intake enables the entry of incident air flow (on the aircraft) into the chamber to inflate and unfold the chamber. "Incident air" is understood to be the incident airflow on the aircraft in flight. As a result of the coupling of the runner to the aircraft with the chamber, the inflating or unfolding thereof causes the runner to extend from the retracted runner position to the extended runner position, in which the device is prepared for the water landing. For the purposes of the present document, it must be understood that the invention, as claimed, also includes embodiments in which the same chamber is coupled between the aircraft and a plurality of runners, as well as embodiments in which a plurality of chambers are coupled between the aircraft and the same runner. Likewise, it must be understood that the same chamber can be connected to a plurality of air intakes. Hereinafter, however, for purposes of descriptive clarity, reference will be made to "the chamber", "the intake" and "the runner", without limitation with respect of the object of the invention claimed.

The device provides the capability of automatically inflating the chamber with the action of the incident air through the air intake. The automatic inflation capability eliminates the need of valves or other supplementary elements, which enables simplifying the device, as well as reducing the weight thereof and of the aircraft in comparison to the water landing devices known in the state of the art.

In a preferred embodiment of the invention, the chamber is porous and air permeable, that is, it allows the air to exit the inside of the chamber to the outside, so that it avoids rupturing or damaging the chamber due to internal overpressure while it is being filled with the incident air flow in flight.

The selectively porous chamber can also allow air to exit the inside of the chamber when it is compressed in the extended-runner position by the impact of the bottom of the runner (the bottom surface thereof) against the surface of the water in the water landing, thereby absorbing the force of the impact of the runner on the surface in the water landing.

Additionally, the chamber can also be porous in a manner that simultaneously allows the exit of air in the chamber and the entry of water therein when the aircraft is on the surface of the water during the water landing (that is, with the runner floating on the water or submerged therein). In this way it is possible to progressively sink the chamber to the degree that the aircraft executes the water landing, which enables braking the aircraft as well as stabilising the flotation thereof on the surface of the water during the water landing after the chamber is full of water. In this way, a suitable distribution and geometric shape of the chamber (for example, made by a diameter and height of the chambers for the case in which they are cylindrical) determines a suitable metacentric height of the aircraft while floating, and consequently a necessary stability. Other considerations such as the force of the waves can also determine the need to have several chambers instead of just one, all of which in a manner known to a person skilled in the art.

Optionally, the intake can be designed, besides for its main function of introducing the incident air into the chamber which causes the chamber to fill with air in flight, to allow the air to exit the chamber when the latter is compressed the extended runner position by the impact of the bottom of the runner against the surface of the water during a water landing and/or to simultaneously allow the water in the chamber to exit and water to enter into the chamber when the aircraft is on the surface after the water landing. In this way it is possible to obtain shock absorption and/or flooding with the porosity of the chamber.

In a preferred embodiment the intake is located on the bottom of the runner, specifically on the contact surface of the runner with the surface of the water during the water landing. In this way, as soon as the runner contacts the surface of the water during the water landing, water starts entering through the intake instead of air, increasing the weight and helping the braking. Furthermore, in this way the shock absorbency of the force of the water landing impact can be controlled, thereby preventing sudden disinflation of the air chamber due to successive contact and impacts or rebounds. Consequently, the water landing device of the invention is able to provide efficient shock absorbency of the strength of the impact with the water during the landing, without causing damage to the device or the aircraft that would prevent its immediate reuse by making it possible to make a soft water landing on the surface of the water.

Another improvement introduced by the invention is derived from the fact that the device helps avoid the phenomenon known as "induced oscillations", consisting in successive uncontrolled lifting and immersions in the water during the water landing. If the runner rebounds on the surface during water landing because, for example, the aircraft executes the water landing at an excessive speed, when contact with the water is lost, air will re-enter the intake so that the force of each rebound will be absorbed. When the rebounding stops, or after the first impact, water is progressively introduced into the chamber, occupying the existing volume of air until the aircraft comes to a stop.

In an advantageous embodiment of the water landing device of the invention, in which the air intake is located on the bottom of the runner, the bottom of the runner is shaped to comprise a forward and upward inclined surface in the direction of the forward movement of the aircraft, to facilitate the entry of incident air through the intake. The inclined surface of the bottom can be provided by selecting a suitable shape for the chamber, for example, a lesser height in the forward portion than in the rear, with respect to its position on the aircraft. It can also be obtained by means of a plurality of chambers having different height in the forward portion than the height of the rear portion. Alternatively, the inclination of the bottom surface can be obtained with the shape of the runner itself, with an outer bottom surface having a forward and upward sloping bottom in the forward direction of the aircraft. Likewise, the inclined surface can have a complementary curvature that maintains a suitable incline or slope. In this regard, the bottom surface can be shaped with sections of the surface having different inclinations, for example, with a forward surface at the intake having a different inclination than the rear surface at the intake, according to the forward direction of the aircraft, thus improving the effect of facilitating the entry of incident air through the intake.

Preferably, in an embodiment of the invention in which the intake is located at the bottom of the runner, the intake and the chamber are placed approximately on the vertical axis of the centre of gravity of the aircraft, with respect of the extended runner position. In this way the risk of the aircraft flipping over due to the impact on the surface during the water landing is avoided by providing a configuration with stable forces at the moment of the impact.

More preferably, the air intake is located in the rear third of the runner. This way also ensures stability of the aircraft when hydroplaning on the surface during the water landing.

Advantageously, with the runner in the retracted position, the chamber is partially or totally contained inside the fuselage of the aircraft. This makes it possible to reduce aerodynamic resistance in comparison with the configurations in which the runner or water landing gear remains exposed to the incident air flow during flight. Additionally, the bottom of the runner can be flush with the skin of the aircraft's fuselage.

Preferably, the air intake has been designed so that it can be a NACA Duct, deployed in the direction of the incident air, which makes it possible to minimise aerodynamic resistance due to the shape of the air intake.

With regard to the material of the chamber and in accordance with the above explanations, use of a textile material similar to the material used in hot air balloons, paragliders, etc., has been found adequate for obtaining the suitable porosity or permeability of the chamber according to the above explanations. Natural silk could also be used, or any other suitable textile material or plastic materials like that which a person skilled in the art would choose to obtain the described technical features.

Optionally, the chamber could have a bellows shape for facilitating the inflating/deflating and/or folding/unfolding thereof. In particular, the chamber can have a cylindrical shape.

On the other hand, it is planned for the device to comprise means for fixing the runner to the aircraft, such as an articulated arm(s) and/or guide(s), etc. that provide strength and stiffness to the device or water landing gear without coercing the function of the shock absorber on the impacts during water landing. There exist fastening means, such as articulated arms or guides, as well as any other suitable locking means for the device of the invention that are known by a person skilled in the art. Additionally, the articulated arm or arms may be configured so that the joints prevent the runner from twisting with respect of a vertical axis, increasing even more the strength and stiffness of the water landing device gear or device.

In addition, the invention may comprise means for locking the retractedrunner in position such as: element(s) for retaining the runner to the aircraft and/or air intake valve(s), etc. The retaining elements may be latches, for example. The function of these locking means is to hold the retractedrunner of the device in the retracted position. Releasing the locking means would enable the extension of the runner for the water landing. The locking means can be released with a hydraulic, pneumatic, or electrical actuating mechanism at the moment of the water landing. The locking means, such as retaining elements or valves, as well as other suitable locking means for the device of the invention are known to a person skilled in the art. The folded chamber with the runner in the retracted position may cause the obstruction of the incident air, which may also be useful for locking the runner in said position.

It has also been considered that the invention could comprise runner extension means to facilitate its initial extension or during its complete movement from the retractedrunner position to the extendedrunner position. These extension means could be, for example, spring(s) and/or actuator(s) (hydraulic, pneumatic or electric), etc. Extension means such as springs or actuators, as well as any other suitable means of extension for the device of the invention are known by persons skilled in the art. Alternatively or complementarily, it has been planned that the force of gravity could be applied to help extend the runner. The extension means may also be used to facilitate positioning the runner in an extendedrunner position in which the centre of gravity of the runner is located sufficiently forward with respect of the chamber in order to improve stability while hydroplaning during the water landing.

In an advantageous embodiment of the water landing device of the invention having runner extension means that comprise a spring, said spring comprising a band or strap folded in a zigzag, being made of suitable material for being extended and contracted, such as, for example, a flexible and resistant material, such as material comprised of carbon fibre or fibreglass, which helps reduce the weight of the spring and the aircraft. Finally, it has also been planned to incorporate limiting means of the runner extension, such as limiters that prevent a portion of the runner from dropping lower than needed, for example, the front edge of the runner from dropping more than necessary, thus keeping the device from being damaged or breaking at the moment the runner impacts against the water. These limiters may be comprised of a flexible belt, band or strap having a length equal to the maximum allowable extension of the runner so that the device is not damaged or broken.

Finally, the aircraft that incorporates the water landing device as described above is also claimed. As previously explained, the water landing device is particularly useful for application on UAVs and light air planes.

In short, as previously described, the present invention provides a simple, versatile device for water landing that is easy to install, results in lower costs and maintenance, and provides additional technical advantages.

### BRIEF DESCRIPTION OF THE DRAWINGS

To complement the explanation of the invention and for the purpose of a better understanding of its technical features, the rest of this patent document makes reference to the accompanying drawings, which, as a practical, non-limiting example, display an embodiment of the device for water landing of the invention applied to an UAV type aircraft.

In said drawings:
Figure 1 displays a perspective view of the fuselage of the aircraft in which the device is shown in an extendedrunner position, suitable for making a water landing.
Figure 2 displays a perspective view of the fuselage of an UAV aircraft, in which the device is shown in a retractedrunner position, suitable for flight.
Figure 3 displays a side view of the fuselage of the aircraft in which the device is shown in an extendedrunner position moments before coming into contact or impacting the surface of the water during a water landing. In the figure the angle of inclination of the surface of the bottom of the runner formed by the runner itself is visible to facilitate entry of incident air the through the intake.
Figure 4 displays a side view of the fuselage of the aircraft in which the device is shown in an extended runner position with the runner contacting or hydroplaning on the surface of the water during a water landing.
Figure 5 displays a side view of the fuselage of the aircraft in which the device is shown in an extendedrunner position and with the runner and chamber submerged underwater.
Figure 6 displays the configuration of the device in the different stages of a water landing by the aircraft.

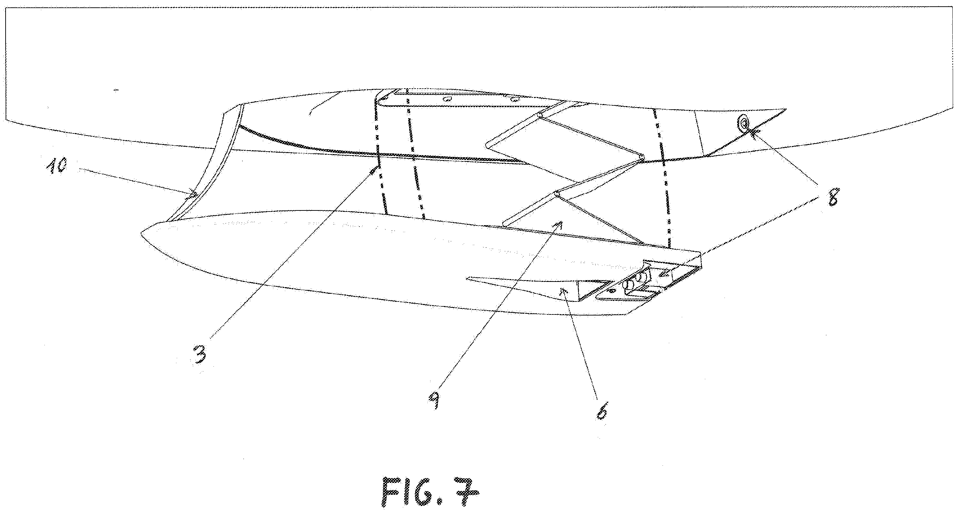

Finally, Figure 7 displays a detailed view of the device which incorporates complementary means.

The following references are used in the Figures:
1: Aircraft
2: Aircraft fuselage
3: Chamber
4: Water landing runner
5: Runner bottom
6: Air intake
7: Surface of the water during water landing
8: Retracted runner position locking means, by retention
9: Runner extension means
10: Runner extension limiting means, with flexible strap.

The following symbols are used in the Figures:
CG: Aircraft centre of gravity
V: Incident air velocity
α: Angle of inclination of the runner bottom surface.

### DETAILED DESCRIPTION OF AN EMBODIMENT

The following is a detailed description of an embodiment of the invention with reference to the Figures.

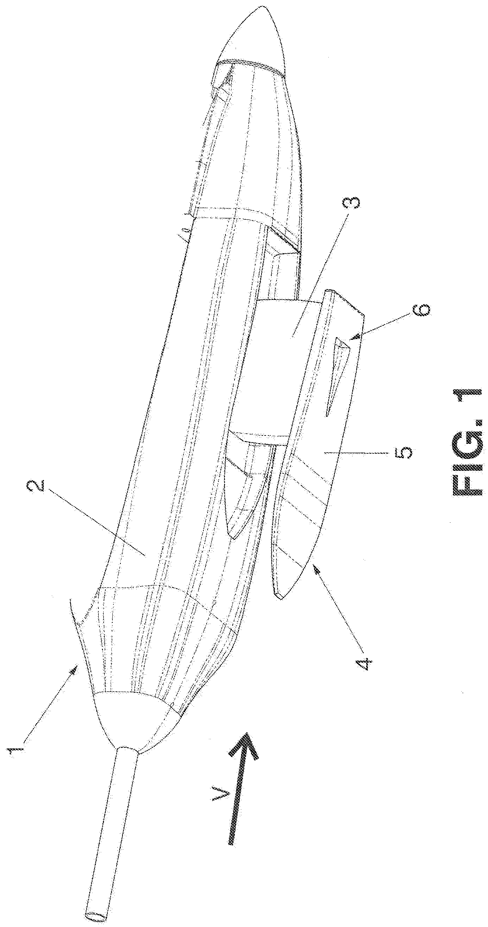

Figure 1 displays the embodiment of the water landing device applied to a fuselage (2) of a UAV type aircraft (1). As can be seen, the devices comprises a water landing runner (4) coupled to fuselage (2) by means of a folding, inflatable chamber (3). Runner (4) and in particular bottom (5) thereof have a suitable shape and features to enable hydroplaning on the surface during a water landing, like a surface of runner bottom (5), which canbe sufficiently flat. In Figure 1 the device is shown in the extendedrunner position prepared for a water landing. In the extended runner position, chamber (3) is full of air and deployed, maintaining runner (4) extended in the apt position for the water landing. Filling chamber (3) with air is done by action of the incident air (velocity V) through air intake (6) located on runner bottom (5), from where the air is channelled into chamber (3). The depicted air intake (6) is a NACA type. Chamber (3) of the described embodiment is made from an air permeable material, with which it avoids damage or ruptures that could occur due to internal overpressure. Also in Figure 1, a housing in fuselage (2) can be seen, inside of which folded chamber (3) is lodged, as well as a portion of runner (4) corresponding to the retractedrunner position.

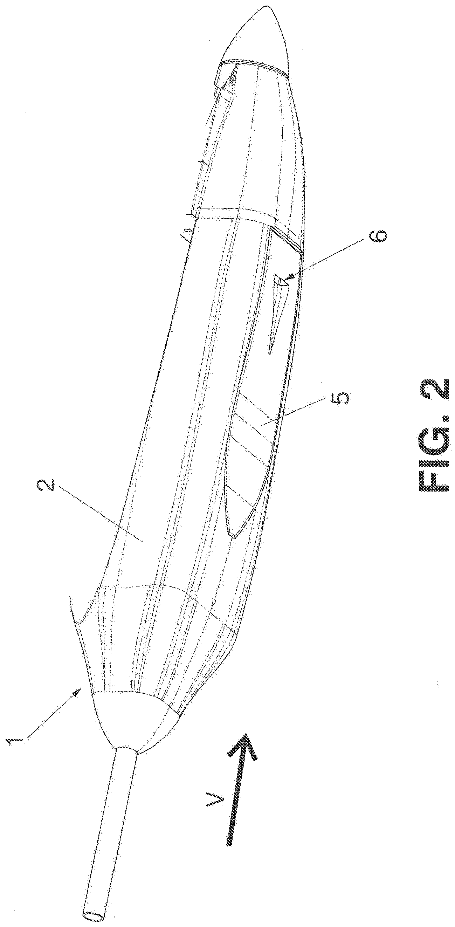

Figure 2 shows the embodiment in the retractedrunner position, apt for when aircraft (1) is in flight. As can be seen in the Figure, in said position runner bottom (5) is flush with fuselage skin (2), thereby reducing the aerodynamic resistance. In this regard, the use of the depicted NACA type intake (6) also contributes to minimising resistance.

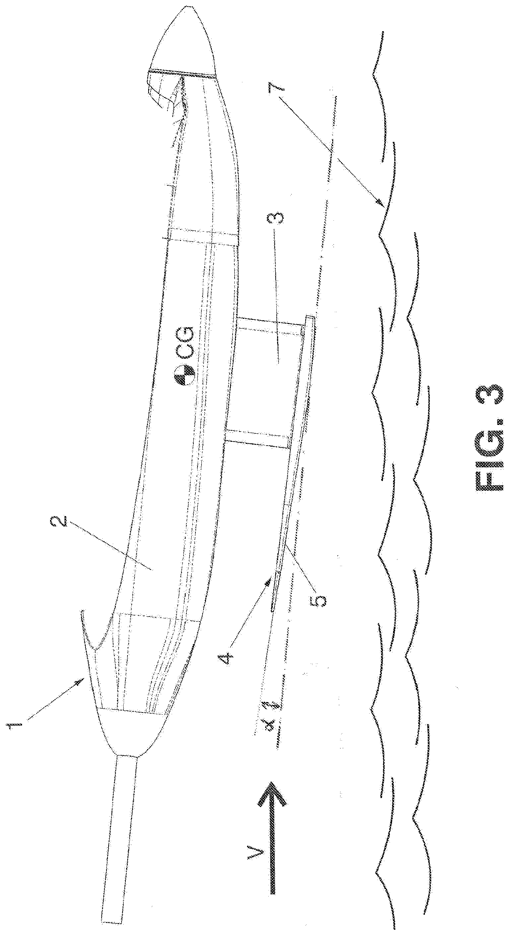

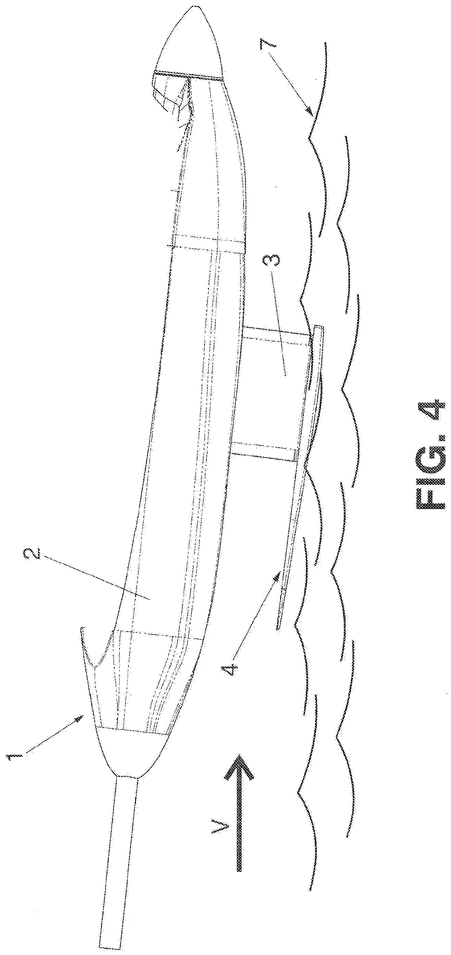

In reference to Figures 3 and 4, the water landing device of the invention is shown in the extendedrunner position moments before the water landing and making contact with water landing surface (7) or hydroplaning over the water, respectively. Intake (6) is located on bottom (5) of runner (4) on the final third thereof, as can be seen in Figures 1, 2 and 7. The centre of gravity (CG) of aircraft (1), the chamber and intake (6) are vertically aligned, as can be seen in Figures 1 and 2.

As can be seen in the Figures, especially in Figure 3, the runner consists in a forward facing upward inclined surface at angle (α), with respect of the longitudinal axis of the depicted aircraft. Preferably, angle of inclination α should be approximately between 3° and6°, preferably around 4° in order to optimise the entry of incident air through the intake.

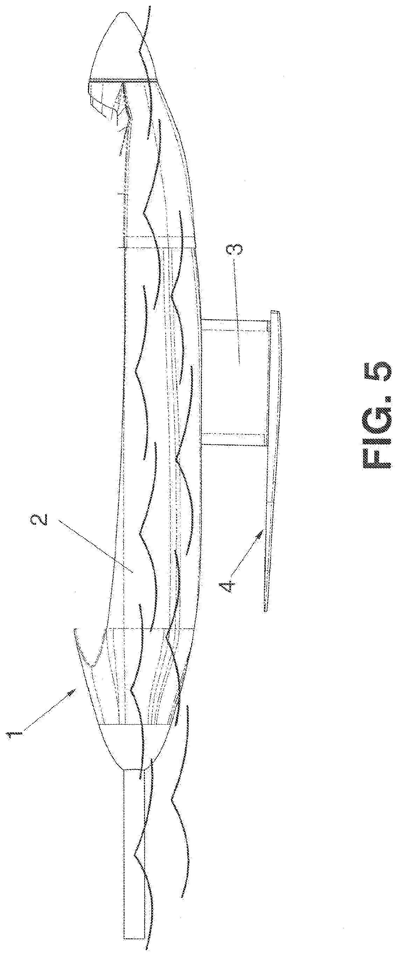

Figure 5 depicts aircraft (1) when it is on the surface following the water landing, with runner (4) and chamber (3) submerged in the water after making the water landing. Chamber (3) is full of water, the water having replaced the air inside through the porous surface of chamber (3) during the water landing.

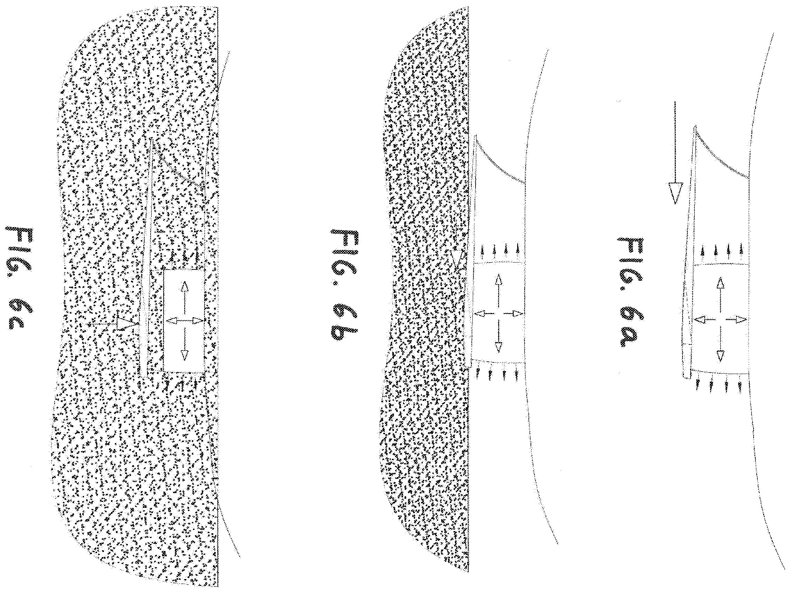

Figure 6 displays the configuration of the device in the different stages of the aircraft during a water landing. In Figure 6a the runner is in extendedrunner position, with the chamber inflated and deployed. Figure 6b depicts the moment in which the runner contacts the surface of the water for the water landing, with the chamber inflated with air. In Figure 6c the runner and chamber are submerged, after a portion of the air has been displaced with water inside the chamber.

Finally, Figure 7 shows a detailed view of the device with complementary means, such as retractedrunner position locking means (8), runner extension means (9) and runner extension limiter means (10). The depicted retractedrunner position locking means comprise retainer elements that latch the runner to the aircraft in the retractedrunner position. With regard to runner extension means (9), the depicted means (9) comprise, as can be seen in Figure 7, a spring comprising a band in a double zigzag. The material chosen for the spring of the embodiment is comprised of fibre carbon material. In regards to the depicted runner extension limiters (10), as can be seen in Figure 7 they comprise a band made of flexible material, such as cloth, for example, fixed between the fuselage of the aircraft and the front edge of the runner, in such a way that it prevents said front edge of the runner from dropping more than desired, thus keeping the device from being damaged or breaking in the moment the runner impacts against the surface of the water during the water landing.

It is not considered necessary to give a more extensive description as any person skilled in the art can understand the scope of the invention and the advantages derived therefrom. In particular, for manufacturing the different components, the manufacturing processes and necessary materials are known in the technical field and easily accessible. In general, the materials, shape, size and location of the elements will be susceptible to changes, as long as they do not represent an alteration of the essence of the invention.

## Claims

1. **DEVICE WHEREBY AN AIRCRAFT CAN LAND ON WATER,characterised in that** it comprises:
- at least one folding, inflatable chamber;
- at least one water landing runner, coupled to the aircraft by means of the chamber; and
- an air intake connected to the chamber;
the intake allows incident air to enter the chamber for inflating and unfolding the chamber to extend the runner from a retractedrunner position to an extendedrunner position apt for the water landing of the aircraft.

2. **DEVICE WHEREBY AN AIRCRAFT CAN LAND ON WATER,** according to claim 1, **characterised in that** the chamber is porous, in such a way that it allows air to exit the chamber during inflation thereof by incident air flow, thereby avoiding breakage or damage to the chamber due to overpressure.

3. **DEVICE WHEREBY AN AIRCRAFT CAN LAND ON WATER,** according to either of claims 1 or 2, **characterised in that** the chamber is porous, in such a way that it allows air to exit the chamber when the chamber is compressed in the extendedrunner position by the impact of the bottom of the runner against the surface of the water during water landing, thus absorbing said impact.

4. **DEVICE WHEREBY AN AIRCRAFT CAN LAND ON WATER,** according to any of claims 1 - 3, **characterised in that** the chamber is porous, in such a way that the chamber enables the simultaneous exit of air in the chamber and the entry of water into the chamber when the aircraft is on the surface of the water landing.

5. **DEVICE WHEREBY AN AIRCRAFT CAN LAND ON WATER,** according to any of claims 1 - 4, **characterised in that** the intake is located on the bottom of the runner.

6. **DEVICE WHEREBY AN AIRCRAFT CAN LAND ON WATER,** according to claim 5, **characterised in that** the intake is a NACA type.

7. **DEVICE WHEREBY AN AIRCRAFT CAN LAND ON WATER,** according to either of claims 5 and 6, **characterised in that** the bottom of the runner comprises a forward, upward inclined plane, with respect of the forward direction of the aircraft, in order to facilitate entry of incident air through the intake.

8. **DEVICE WHEREBY AN AIRCRAFT CAN LAND ON WATER,** according to any of claims 5 - 7, **characterised in that** the intake is located on the rear third portion of the runner.

9. **DEVICE WHEREBY AN AIRCRAFT CAN LAND ON WATER,** according to any of claims 5 - 8, **characterised in that** in the extendedrunner position the intake of the chamber is located approximately on the vertical axis of the centre of gravity of the aircraft.

10. **DEVICE WHEREBY AN AIRCRAFT CAN LAND ON WATER,** according to any of claims 1 - 9, **characterised in that** in the retracted-runner position the chamber is placed folded inside the fuselage of the aircraft and the runner bottom is substantially flush with the skin of the fuselage.

11. **AIRCRAFT** that incorporates a water landing device according to with any of the previous claims.
